# FASCICULE DE BREVET EUROPEEN

(11) **EP 2 350 997 B1**
(45) Date de publication et mention de la délivrance du brevet: **15.11.2017**
(21) Numéro de dépôt: 09740505.4
(22) Date de dépôt: 28.08.2009
(51) Int. Cl.: G09B 5/06, G09B 19/00

(54) **PROCEDE ET SYSTEME DIDACTIQUES POUR MODIFIER LE COMPORTEMENT POSTURAL D'UN UTILISATEUR D'UN MOBILIER**
TRAININGSVERFAHREN UND SYSTEM ZUM ÄNDERN DES HALTUNGSVERHALTENS EINES MÖBELBENUTZERS
TRAINING METHOD AND SYSTEM FOR CHANGING THE POSTURAL BEHAVIOR OF FURNITURE USER

(30) Priorité: 28.08.2008 FR 0855778
(43) Date de publication de la demande: 03.08.2011
(73) Titulaire: Ribaud Chevrey, Daniel Jacques Louis, 75013 Paris (FR)
(72) Inventeur: Ribaud Chevrey, Daniel Jacques Louis, 75013 Paris (FR)
(74) Mandataire: Pontet Allano & Associes
(86) Numéro de dépôt international: PCT/FR2009/051644
(87) Numéro de publication internationale: WO 2010/023414

(56) Documents cités:
- WO-A1-2007/131340
- HUMATIX: "Help-menu: Beelschermtachograaf versie 3.0" 20 avril 2006 (2006-04-20), , XP002519159 *WERKING IN HET KORT * *GEBRUIK* *BEGELEIDING* *WERKINSTELLINGEN* *SYSTEEMINSTELLINGEN* -& HUMATIX: "Nieuwsbrief 16-02-2006 : de nieuwe Beeldschermtachograaf is klaar..." , XP002519160 Extrait de l'Internet: URL:http://humatix.q0.nl/W/4506.6993/HU003 Q20060216Q231>

## Description

La présente invention concerne un procédé et un système didactique pour modifier le comportement postural d'un utilisateur d'un mobilier, à l'aide d'une base de données relative à des paramètres de positions de plusieurs zones articulées déterminées du corps et à une pluralité de positions dites types du corps pouvant être obtenues en modifiant lesdits paramètres.

Le logiciel de l'art antérieur connu sous le nom de "Screencoach" produit par la compagnie Humatix basée à Amsterdam à pour vocation d'enseigner un rythme de travail sain à un utilisateur utilisant un ordinateur en position assise. Mais contrairement à la présente invention, celui-ci ne prévoit que le suivi de l'interaction de l'utilisateur avec le clavier et/ou la souris de l'ordinateur, plutôt que celui de l'assise de l'utilisateur.

L'invention concerne en outre un tel procédé appliqué à un mobilier comportant des réglages selon des paramètres correspondant sensiblement aux paramètres utilisés dans cette base de données pour les zones articulées du corps. Elle porte en outre sur un système de ce type destiné à l'amélioration de la santé humaine, et sur un dispositif de détection de position de l'utilisateur utilisable avec un tel système.

La recherche d'une posture adaptée intéresse et conditionne préalablement la maîtrise des gestes ; autrement dit la possibilité de réduction des contraintes statiques et des efforts mécaniques liés aux gestes et leviers utilisés, donc de réduction des risques lésionnels. La connaissance et l'entretien de cette physiologie (interdépendance du geste et de la posture), en position assise (de plus ou moins longue durée), nécessite tout d'abord le redressement régulier de la colonne vertébrale, et par conséquent l'adaptation préalable des causes basses dites posturales, liées à la hauteur du siège et à la possibilité de redressement du bassin. Ensuite, l'approche gestuelle, des causes hautes, dites fonctionnelles, nécessite la prise en compte de l'inactivité relative posturale et de l'activité au travail : selon le cas, de l'utilisation plus ou moins systématique de la vue, de l'ouïe, de l'odorat et des gestes répétitifs associés. La capacité de contrôle sur les causes hautes nécessite, par conséquent, l'apprentissage d'une attitude posturale dynamique adaptée, comportant nécessairement la transmission de connaissances de bases spécifiques et une pratique régulière afin d'acquérir les automatismes véritablement physiologiques.

La mise en oeuvre de ce procédé permet en outre d'obtenir des gains dans le domaine de l'efficacité, la précision, l'attention, la sensation de fatigue ou la productivité.

Selon les conclusions de l'Expertise collective de l'INSERM de 1995 sur les rachialgies en milieu professionnel, réalisée sous la présidence du Professeur BOURGEOIS, rhumatologue CHU Pitié-Salpêtrière, les experts, qui mettent principalement en cause la position assise avec la neutralisation de la vigilance musculaire (dû au prolongement d'une mauvaise posture prolongée) indiquaient que la médecine ne peut endiguer le mal de dos et que la voie intéressante est celle de « l'éducation vertébrale à l'école », autrement dit à l'âge de l'acquisition des habitudes de vie entre 7 et 12 ans. Ces conclusions ne tenaient pas compte de la généralisation actuelle de l'usage de l'informatique et du succès des consoles de jeux, dont l'utilisation prolongée dans une position majoritairement immobile est un facteur supplémentaire aggravant, en raison de la perturbation de la physiologie : notamment en raison de la perte de vigilance musculaire occasionnée et de l'absence de perception normale du redressement.

Or l'acquisition et le maintien d'une position adéquate ou satisfaisante, par exemple dans une position assise devant une surface de travail, ne sont pas faciles à obtenir de la part d'un utilisateur, en particulier un enfant et/ou sur une longue durée. Il n'est pas toujours possible de disposer d'une tierce personne pour corriger la position de l'utilisateur, et les recommandations ou corrections d'une tierce personne ne sont pas toujours bien acceptées ou suivies par un tel utilisateur.

Dans d'autres types de circonstances, il peut aussi être utile d'obtenir d'un utilisateur de mobilier une position particulière, par exemple pour des raisons de confort, de performance ou de productivité, ou d'esthétisme.

Il y a donc un besoin pour faciliter l'acquisition et le maintien par un utilisateur d'un mobilier d'une position déterminée.

Un but de l'invention est de faciliter l'acquisition et le maintien par un utilisateur d'un mobilier d'une position déterminée, en particulier lors d'une longue durée de quasi immobilité, par exemple de une à deux heures, voire trois ou quatre heures ou plus.

L'invention cherche ainsi à permettre à différents types d'utilisateurs de mobilier d'améliorer leur comportement postural, par exemple pour des raisons de santé et de prévention du mal de dos ou de confort, mais aussi pour tout autre type de raisons.

L'invention propose un procédé de suivi et de rappel postural associés à des présentations d'informations pédagogiques permettant la transmission et le contrôle des connaissances ainsi que l'apprentissage pratique des recommandations posturales. Ce procédé comprend aussi des interactions incitant l'utilisateur à réfléchir aux mécanismes de modifications de sa posture par rapport au mobilier, et au conditionnement de sa posture par les réglages du mobilier; de sorte que l'acquisition de ces connaissances et de ces automatismes de redressement lui permette aussi, dans une certaine mesure, de pallier l'impossibilité de réglage du mobilier.

Ce procédé est mis en oeuvre par un système comprenant des moyens de calcul informatiques incluant une interface de présentation d'informations à l'utilisateur, typiquement un affichage graphique, et une interface d'entrée de données par l'utilisateur, typiquement un clavier et/ou une souris et/ou un écran tactile.

Dans les modes de réalisation ici décrits à titre d'exemples, le mobilier concerné comprend un dispositif d'assise, par exemple un tabouret ou un fauteuil, et une surface de travail, par exemple une table ou un bureau à surface horizontale ou inclinée. Le procédé est alors mis en oeuvre par un programme informatique exécuté par un ordinateur, par exemple le même ordinateur servant au travail ou aux occupations de l'utilisateur de ce mobilier. Un tel système comprend des moyens de détection de la position de l'utilisateur par rapport au mobilier, typiquement exemple des capteurs de contact ou de pression ou même un système de vision artificielle. Selon l'invention, il s'agit d'un coussin posé sur l'assise et doté de plusieurs capteurs de pression répartis sur sa surface pour détecter l'emplacement et possiblement l'orientation de l'appui du bassin de l'utilisateur sur l'assise.

Lorsque le mobilier présente des possibilités de réglages de ses caractéristiques géométriques, le procédé tient compte de ces possibilités, et les intègre dans les interactions qu'il propose, par exemple en demandant à l'utilisateur une modification de ces réglages.

Ce mobilier peut en outre comprendre une ou plusieurs motorisations communiquant avec le système informatique pour lui permettre de détecter la valeur de tels réglages et de commander la modification d'un ou plusieurs de ces réglages. Ces possibilités sont aussi prises en compte dans le procédé, qui peut par exemple commander de lui-même une telle modification ou proposer à l'utilisateur de réaliser lui-même une telle modification.

L'invention propose ainsi un procédé didactique pour modifier le comportement postural d'un utilisateur d'un mobilier en position assise au cours d'une activité prolongée comprenant un ou plusieurs efforts ou mouvements, statiques ou dynamiques et pouvant être répétés ou permanents ou les deux, d'au moins une partie du corps. Dans des modes de réalisation les plus typiques, le procédé concerne une situation où ces efforts d'activité sont effectués principalement par des parties du corps situées au dessus de la ceinture, ou au moins au dessus des articulations des jambes avec le bassin. Les parties inférieures peuvent toutefois être aussi sollicitées par ces efforts d'activité, par exemple à titre de contrepoids ou de points d'appui.

L'action sur le comportement postural peut concerner l'ensemble du corps, par exemple selon la nature des efforts d'activité ou les caractéristiques du mobilier et de la position assise concernée.

Dans l'exemple détaillé ci-après, le procédé est mis en oeuvre pour modifier et enseigner une meilleure posture tout au long d'une activité de bureau, par exemple pour lire ou écrire à la main ou sur un ordinateur. Il s'agit ainsi d'obtenir cette rectification posturale en plus d'une activité principale de l'utilisateur, sans compromettre le bon déroulement de cette activité ou en limitant les interférences.

Sur une longue durée, la position assise limite la fatigue du bas du corps, mais peut présenter des effets indésirables lorsque la position est mauvaise du point de vue anatomique, même en situation d'inactivité complète. Dans tous ces cas et plus particulièrement dans le cas d'une activité du haut du corps, l'inactivité du bassin va avec une perte de sa vigilance musculaire, qui est soulignée par les experts comme étant une cause principale de la survenue de désordres.

Dans une situation d'activité avec des efforts musculaires des parties hautes du corps, les critères ergonomiques peuvent être différents de la situation d'inactivité. Cette interaction entre les facteurs mécaniques liés aux mouvements, occasionnant des bras de levier et moments de forces tandis que la posture est insuffisamment contrôlée, peut être source de désordres supplémentaires et aggravants. Toute situation d'activité présentant des « causes hautes » d'effort ou de tension musculaire peut ainsi bénéficier d'une telle modification pédagogique du comportement postural au long cours, en parallèle à l'activité principale.

Une telle situation d'activité peut comprendre la nécessité d'un effort permanent ou prolongé, qui peut être par exemple dans le cou pour maintenir une position de la tête et/ou assurer un mouvement de la tête ou des yeux, pour lire ou pour étudier un écran d'ordinateur ou pour surveiller des événements comme dans le cas de la conduite d'un véhicule.

Des efforts répétés liés à des causes hautes peuvent aussi être par exemple des mouvements des bras comme pour déplacer des objets sur une chaîne de production ou manipuler les commandes d'un véhicule, un maintien ou des mouvements des avant bras ainsi que des mains et des doigts comme pour écrire à la main ou au clavier ou pour manier une souris d'ordinateur de façon intensive pour des travaux de dessin sur ordinateur ou au cours d'un jeu vidéo.

Selon l'invention, un tel procédé didactique est mis en oeuvre par informatique et utilise une base de données numériques relative à des paramètres de positions de plusieurs zones articulées déterminées du corps et à une pluralité de positions du corps pouvant être obtenues en modifiant lesdits paramètres, plus particulièrement en position assise.

Ce procédé comprend une ou plusieurs itérations des étapes suivantes :
- mesurer une durée écoulée à partir d'un instant déterminé de début de cycle, postérieur à l'installation dudit utilisateur sur ledit ou au sein dudit mobilier, par exemple depuis la mise en route ou l'installation d'un ordinateur ou d'un programme ;
- détecter le franchissement d'un seuil de durée prédéterminée en relation avec ladite base de données et en fonction des possibles itérations précédentes ;
- générer un signal et/ou une information d'alerte demandant audit utilisateur d'exécuter au moins un mouvement déterminé d'au moins une desdites zones articulées, avec son corps réel ou par une action sur un corps virtuel, ce mouvement étant choisi de façon à conduire d'une première position type à une deuxième position type au sein de cette base de données ;
- enregistrer des données représentant la conformité de la réaction de l'utilisateur à ladite demande, par exemple un clic sur un bouton « ok » à un endroit spécifique de l'écran, ou une détection du mouvement par des moyens de détection, ou une détection d'un changement de position, ou une détection d'un mouvement imposé par l'utilisateur à une animation constituant un personnage virtuel ou un avatar. Cette conformité est alors vérifiée par une comparaison entre les données enregistrées par les moyens de détection et les données représentant le mouvement demandé.

Ce procédé permet l'acquisition d'automatismes coordonnés, entre l'équilibre postural préalable utile (assurant le contrôle sur les causes basses, dites posturales, à savoir la capacité de redressement du bassin et de la colonne vertébrale) et le déroulement des gestes, réduisant notamment les efforts et la localisation des contraintes, occasionnés dans l'immédiat ou dans la durée, tels qu'observables avec les causes fonctionnelles.

De préférence, une pluralité de mouvements demandés successivement à l'utilisateur, au cours d'un groupe d'une ou plusieurs itérations, sont choisis en relation avec la base de données pour représenter des étapes successives conduisant d'une première position type à une deuxième position type de ladite base de données, selon un chemin reliant lesdites positions types et correspondant à une progression selon une échelle de valeurs au sein de ladite base de données.

L'invention propose aussi un système comportant des moyens pour mettre en oeuvre ce procédé.

En particulier, l'invention propose un dispositif de détection de la posture ou du changement de posture de l'utilisateur, communiquant avec un système mettant en oeuvre ce procédé, entre autres dans un but de prévention de la lombalgie en position assise.

D'autres particularités et avantages de l'invention ressortiront de la description détaillée d'un mode de mise en oeuvre nullement limitatif, et des dessins annexés sur lesquels :
- la FIGURE 1 illustre schématiquement trois paramètres posturaux et différents mouvements gérés par un système mettant en oeuvre le procédé selon l'invention, dans un mode de réalisation de l'invention appliqué à un utilisateur d'un mobilier de type poste de travail assis avec capteur de position et réglages motorisés ;
- la FIGURE 2 représente un tableau illustrant les différentes configurations posturales prises en compte par le procédé selon l'invention dans le même mode de réalisation, définies selon trois paramètres posturaux ainsi que certaines caractéristiques et conséquences qui y sont associées, l'ensemble étant mémorisé dans la base de données ;
- la FIGURE 3 représente les mêmes configurations posturales associées à certaines caractéristiques de résultat et intérêt au regard d'un objectif de prévention de la lombalgie chez l'enfant de 7-12 ans ;
- la FIGURE 4 est un diagramme procédural illustrant le fonctionnement du procédé selon l'invention, dans une option dite simple du même mode de réalisation, c'est-à-dire sans nécessiter de capteurs de position ni réglages de mobilier ;
- la FIGURE 5 est un diagramme procédural illustrant le fonctionnement du procédé selon l'invention, dans une option dite « intermédiaire 1 » du même mode de réalisation, c'est à dire avec capteurs de position ;
- la FIGURE 6 est un diagramme procédural illustrant le fonctionnement du procédé selon l'invention, dans une option dite complète du même mode de réalisation, c'est à dire avec capteur de position et réglages motorisés ;
- la FIGURE 7 illustre schématiquement l'architecture et les interactions au sein d'un système mettant en oeuvre le procédé selon l'invention, dans le mode de réalisation illustré en FIGURE 1.

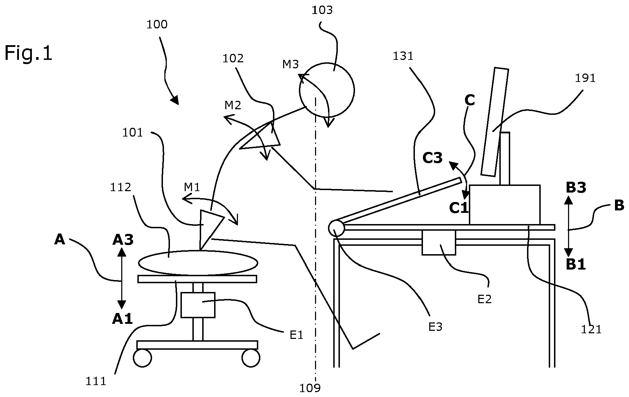

En FIGURE 1 est illustré un utilisateur 100 d'un mobilier comprenant un siège 111 et un bureau 121, lui même muni d'une surface de travail 131.

Le siège 111 est réglable en hauteur selon l'axe A, manuellement ou motorisé par un effecteur E1, entre une position basse A1 et une position haute A3. Le bureau 121 est réglable en hauteur selon l'axe B, manuellement ou motorisé par un effecteur E2, entre une position basse B1 et une position haute B3. La surface de travail 131 est réglable en inclinaison selon l'axe C, manuellement ou motorisé par un effecteur E3, entre une position basse C1 et une position haute C3.

Les axes de réglages (exemple : A) sont gradués ici en trois valeurs (exemple correspondant : A1, A2 et A3), dont la définition peut varier selon la taille du sujet ou les dimensions du mobilier. Le procédé utilise un ensemble de données représentant un « tableau ergonomique » qui a été établi et est valable spécifiquement pour cette définition des paramètres posturaux et des réglages correspondants. D'autres modes de réalisation pourraient être implémentés en utilisant un nombre différents de réglages, étalonnés différemment par rapport à la taille du sujet, en établissant un tableau ergonomique qui serait adapté à ces paramètres de réglage et à leur étalonnement.

Le procédé didactique est mis en oeuvre par un programme informatique fonctionnant de préférence en permanence, par exemple en tâche de fond, au sein d'un ordinateur 191 utilisé par exemple pour travailler ou pour se distraire.

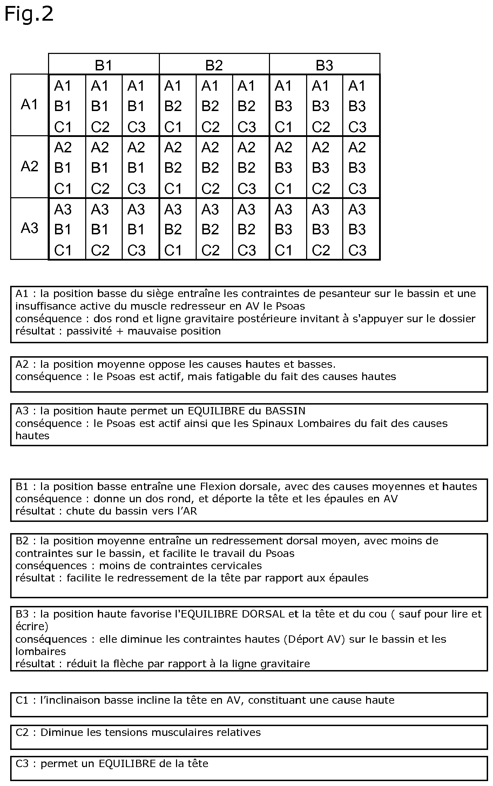

La FIGURE 2 représente un tableau illustrant les différentes configurations posturales prises en compte par le procédé selon l'invention dans le même mode de réalisation, définies selon trois paramètres posturaux A, B et C. Ces trois paramètres sont définis et étalonnés selon trois valeurs ou positions 1, 2 et 3, donnant ainsi 27 positions types de réglage pour le mobilier, soient A1B1C1, A1B1C2, etc. jusqu'à A3B3C3.

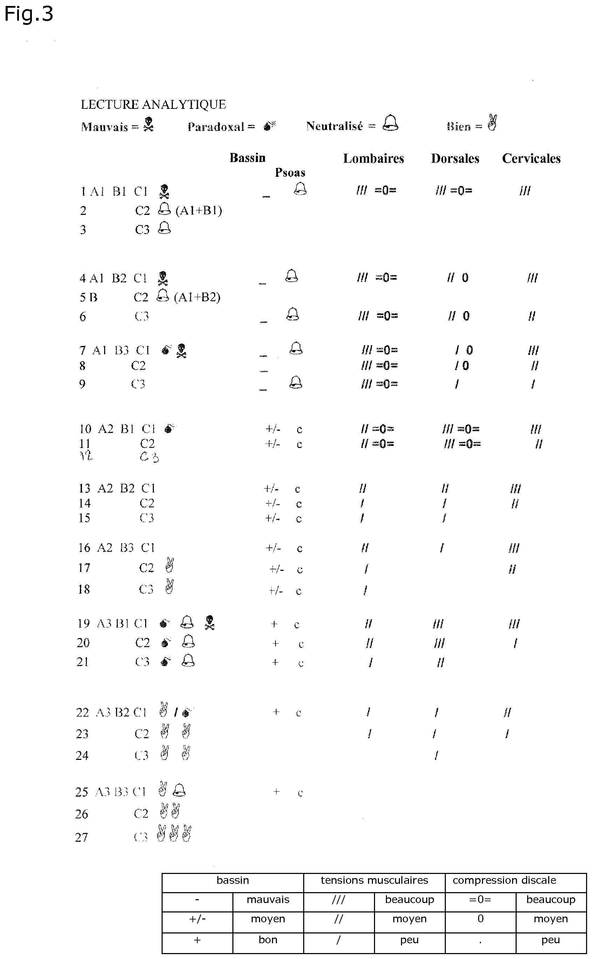

La FIGURE 3 représente ces mêmes positions, analytiquement associées à leurs conséquences vis à vis du bassin, de l'activité du muscle psoas, et des vertèbres lombaires dorsales et cervicales, ainsi que leur intérêt du point de vue d'un objectif de la croissance et de la prévention de la lombalgie chez l'enfant de 7 à 12 ans.

A partir de constations cliniques et/ou de savoir faire, par exemple d'un ergonome ou d'un kinésithérapeute, chacune de ces différentes positions est ainsi associée à des caractéristiques qui lui sont propres, par exemple ses conséquences pour telle ou telle partie du corps ou du squelette ainsi que sa valeur par rapport à l'objectif postural recherché.

Ces positions et les valeurs de réglages qui leur correspondent, ainsi que leurs caractéristiques associées, sont mémorisées dans une base de données exploitée par le logiciel mettant en oeuvre le procédé didactique. Cette base de données peut aussi comprendre des données représentant un étalonnage numérique de ces positions, par exemple correspondant à la taille du sujet et aux dimensions du mobilier.

Au sein de cette base de données, ces positions sont en outre reliées entre elles par des chemins logiques représentant différentes progressions possibles ou souhaitables entre certaines d'entre elles, et selon une échelle de valeurs correspondant à l'objectif postural recherché, par exemple en fonction de constatations cliniques ou d'études biomécaniques.

### Contexte médical de l'application à la position assise

Dans le cadre de l'application ici décrite, la posture recherchée est en particulier une posture permettant une diminution des contraintes du fait d'un meilleur équilibre, parce que l'équilibre permet des mouvements permanents qui entretiennent toutes les propriétés et une capacité d'adaptation automatique du corps, la « proprioceptivité ». En effet :
- la pesanteur génère le tassement et la perte de vigilance musculaire, avec le temps les propriétés des muscles sont neutralisées
- la connaissance des bons mouvements et la possibilité d'actions musculaires permettent de revenir à l'équilibre régulièrement
- le but de la bonne posture est toujours le redressement en faveur de la mobilité autour de l'équilibre.

En effet, le tissu vivant bouge par nature. L'immobilité provoque un effet « plâtre» (utilisé pour la cicatrisation ou la consolidation osseuse) qui occasionne des troubles fonctionnels comme la fonte musculaire et de relatifs enraidissements. A l'inverse, la mobilité bien conduite dans les activités physiques et sportives entretient les propriétés du muscle (contractibilité et notamment capacité de contraction automatique, élasticité et force), les amplitudes articulaires, la nutrition des cartilages et l'ossification. A l'âge de forte poussée de croissance le disque intervertébral est plus dur que le cartilage de conjugaison des vertèbres. Il convient donc de comprendre et de prendre en compte les lois de la croissance et les conséquences de l'hyperpression articulaire, du déséquilibre des pressions et des tensions musculaires maintenues trop longtemps.

Il est à noter toutefois que l'objectif de l'invention en elle-même, de faciliter l'acquisition et le maintien d'un comportement postural déterminé, existe indépendamment des raisons pouvant présider au choix du type de comportement postural à obtenir. L'application ici décrite cherche à obtenir un comportement permettant entre autre la prévention de la lombalgie, mais cette recherche de prévention ne doit pas être vue comme constituant forcément un objectif de l'invention en elle-même. D'ailleurs, même si le type d'application ici décrit ne peut bien sûr qu'être bénéfique en lui-même, le procédé didactique d'apprentissage postural de l'invention pourrait aussi bien être appliqué de façon similaire à l'apprentissage d'autres types de posture, par exemple pour la recherche de la performance sportive en permettant de travailler la nature du geste technique, ou pour la recherche d'une meilleure rapidité de réaction pour un pratiquant de sport de combat ou pour un combattant. Il suffirait pour cela à l'homme du métier de définir un tableau ergonomique correspondant à la posture recherchée, de définir les chemins reliant entre elles ses positions types, et de définir les mouvements à demander lors des différentes interactions ou interpellations.

### Le système

Dans le mode de réalisation ici décrit le système selon l'invention comprend :
a) Logiciel qui gère :
   - les alertes et les réglages correspondants,
   - et les interpellations pédagogiques selon des fréquences dans le temps, et le contrôle de la réalisation des mouvements demandés.
b) Coussin capteur 112 qui enregistre :
   - la posture maintenue dans le temps
   - les mouvements réalisés
c) Mobilier ergonomique (c'est à dire réglable):
   - siège 111 dont la hauteur A est réglable
   - bureau 121 dont la hauteur B est réglable
   - plan de travail 131 inclinable C depuis l'horizontale D'autres paramètres de réglage peuvent aussi être envisagés, par exemple l'inclinaison du siège qui facilite la bascule du bassin (mouvement prédominant au redressement).
d) Motorisation des différents paramètres de réglage A, B et C.

### Logiciel

Le logiciel pilote les réglages de la motorisation et gère les données transmises par le coussin afin de « coacher » ou organiser et piloter l'apprentissage du redressement. Le fonctionnement du logiciel utilise un étalonnage des 27 positions possibles liées au réglage des 3 paramètres principaux, le siège 111, la table 121 et le plan incline 131, sur 3 niveaux de référence : BAS (réglage en position 1), MOYEN (réglage en position 2) et HAUT (réglage en position 3). Ces 27 positions dites types (représentant l'espace d'évolution de l'utilisateur) permettent d'envisager toutes les postures possibles et notamment le déplacement de la ligne gravitaire 109, ainsi que l'étude des mouvements du redressement.

Il existe une similitude entre d'une part les mouvements volontaires du redressement du bassin 101, de la région dorsale, des omoplates et des épaules 102 et de la tête 103, et d'autre part les mouvements involontaires obtenus respectivement par le réglage A du siège, de la table (B) et du plan de travail (C). Cette similitude est utilisée dans la réalisation de deux types de fonctions :
- une fonction dite passive de surveillance posturale, plus ou moins automatique : par alerte et/ou réglage du mobilier ergonomique, sur commande directe par le logiciel, ou par l'utilisateur à la demande du logiciel ;
- une fonction dite active ou interactive : apprentissage et acquisition psychosomatique du redressement.

Les principaux mouvements pouvant être demandés à l'utilisateur, à titre d'exercice ou en liaison avec un changement de position (par adaptation volontaire de la posture et/ou par modification de réglages), comprennent par exemple les mouvements suivants :
M1 : la bascule du bassin 101 (liée à la hauteur du siège, à l'ouverture de l'angle de la hanche) : ce mouvement prédomine au redressement lombaire et dorsal inférieur, permettant le rapprochement des omoplates si le plan de travail est bien réglé. Dans le cas contraire, les causes hautes associées à un bureau trop bas opposent des contraintes de pesanteur gui l'emportent rapidement sur la possibilité de redressement, occasionnant fatigue et difficulté de maintien dans la durée.
M2 : le redressement dorsal et rapprochement des omoplates et des épaules 102 en arrière (liés à la hauteur du bureau) réduisent la flèche gravitaire (distance entre le sommet des vertèbres et la ligne gravitaire, définie par la ligne verticale passant par le tragus de l'oreille
M3 : l'alignement de la tête 103 (lié au redressement du plan de travail) permet que la ligne gravitaire tombe juste en avant de l'assise du bassin, finalisant ainsi la posture d'« autograndissement », vérifiable en plaçant le poing fermé sous le menton (coude replié, posé sur le plan incliné) sans nécessiter de flexion des cervicales ou d'inclinaison de la tête vers l'avant.

Le logiciel comprend deux types de fonctions fonctionnant selon deux schémas temporels qui peuvent être indépendants l'un de l'autre. Ces types de fonctions comprennent en particulier :
1) La fonction passive et automatique de surveillance, qui alerte l'utilisateur sur l'excès dans la durée qui neutralise la vigilance musculaire, avec, pour conséquences fonctionnelles, de possibles mécanismes lésionnels pour un moindre effort :
   - Alerte rouge : nécessité d'une modification de posture de l'utilisateur, à travers une adaptation volontaire de la part de l'utilisateur (par changement postural quel que soit les réglages) et/ou par un réglage du poste de travail (lorsque celui-ci le permet). Typiquement, l'alerte rouge propose :
      - d'une part, le réglage prioritaire du mobilier quand il est réglable (automatiquement ou manuellement) ;
      - d'autre part, l'adaptation volontaire par l'utilisateur qui doit nécessairement modifier sa posture, par exemple si le mobilier ne peut être réglé (fixe) ou bien après réglage si la position n'est toujours pas satisfaisante.
   - alerte bleue : interpellation avec rappels de redressement (adaptation volontaire) et d'exercices (mouvements de mobilisation sans changement postural au final) pour limiter la fatigabilité. Typiquement, l'alerte bleue propose :
      - d'une part, l'ajustement du mobilier du mobilier quand il est réglable (automatiquement ou manuellement) ;
      - d'autre part, l'adaptation volontaire de l'utilisateur pour qu'il modifie sa posture à défaut de pouvoir régler le mobilier (fixe), ou après modification du réglage si c'est encore utile.
   - alerte verte : rien de particulier à signaler, la position d'équilibre permet la mobilité. Elle peut constituer un simple rappel de la surveillance et/ou décerner un satisfecit, par exemple comprenant une augmentation d'un nombre de points dans un compteur.
2) La fonction active ou interactive de pédagogie :
   A) - fait visualiser graphiquement à l'écran par l'utilisateur les diverses postures (les 27 positions types possibles, déterminées par le réglage des 3 paramètres principaux du poste de travail : hauteur siège, hauteur table et inclinaison du plan de travail).
      L'identification visuelle des bonnes et des mauvaises postures est facilitée par une correspondance graphique des couleurs qui associe distinctement les mouvements de redressement du corps aux 3 réglages principaux des hauteurs, du siège, du plan du bureau et de son inclinaison.
   B) - génère et affiche diverses interpellations du redressement dans le temps, visant la pratique régulière et l'acquisition des automatismes corporels correspondants.

### Capteur

Le coussin capteur, enregistre la posture et les mouvements : il est muni de capteurs sensibles au déplacement de la ligne gravitaire de l'utilisateur. Il est connecté à l'ordinateur (par exemple sans fil) doté du logiciel spécifique d'accompagnement (« coaching »), lequel compare la position détectée avec les bonnes et les mauvaises positions mémorisées dans la base de données. Il constitue un moyen technique qui permet la réalisation d'une partie du procédé dite comparative, qui est utilisée dans les fonctions passives et automatiques ainsi que dans les fonctions actives et interactives.

Le logiciel reçoit des informations depuis le coussin capteur, qui lui permettent ainsi :
- d'objectiver, d'une part, la posture dans la durée avant de déclencher les alertes ; et
- d'observer et de contrôler, d'autre part, la conduite des exercices exécutés en réponse aux interpellations.

### Motorisation

La motorisation des réglages permet une adaptation préalable optimale de la posture, en fonction de la morphologie de l'utilisateur.

Les 3 principaux outils paramétrables du mobilier ergonomique sont motorisés en vue d'obtenir et de faciliter les mouvements du redressement correspondants (réduction les effets de la pesanteur):
- motorisation de l'élévation du siège : équivaut à une bascule du bassin vers l'avant ;
- motorisation de l'élévation du plan du bureau : équivaut au redressement dorsal ;
- motorisation de l'inclinaison du plan de travail : équivaut au rapprochement des omoplates vers l'arrière et alignement de la tête (réduction des contraintes sur les vertèbres cervicales et les muscles, dues à la chute de la tête en avant sur le plan de travail).

### Différents niveaux de configurations

L'invention peut être implémentée selon différentes formules, par exemple sous forme de caractéristiques optionnelles, permettant ainsi une utilisation par tous quelle que soit la diversité des équipements mobiliers et des postes de travail, qui sont le plus souvent non ergonomiques et non réglables :
- Formule restreinte 1 : logiciel + coussin
- Formule restreinte 2 : logiciel + coussin + mobilier réglable
- Formule complète : logiciel + coussin + mobilier à réglage motorisé commandé par le logiciel

### Formule minimale

On peut aussi concevoir une formule minimale non revendiquée en tant que telle des procédés dévoilés dans la présente demande. Dans cette formule minimale le logiciel a une fonction basée essentiellement sur l'aspect pédagogique et incitatif.

A la demande ou au cours des différentes interpellations, le logiciel 210 montre les 27 positions possibles, classées des plus mauvaises aux meilleures dans le tableau ergonomique. Il propose des interpellations pédagogiques, un apprentissage des mouvements du redressement, des questionnaires de contrôle, et valide les bonnes réalisations selon la réponse.

Le logiciel accompagne l'apprentissage du redressement et de l'acquisition des automatismes de la mobilité jusque dans la position la mieux équilibrée. Il informe en montrant le fonctionnement du redressement du dos et les mauvaises postures.

Il gère un QCM qui apporte un contrôle des connaissances tandis que les résultats contribuent à motiver l'utilisateur dans la poursuite de cette pratique fonctionnelle.

Dans les interpellations d'informations ou de demandes d'interactions, les éléments suivants sont représentés :
réglages des éléments selon les axes A, B et C :
   - « A » représente le niveau de l'assise. Ce réglage influe sur la position du bassin et l'action du Psoas, ce qui a des conséquences sur les lombaires.
   - « B » représente le niveau du bureau. Ce réglage influe sur la position des dorsales, ce qui a des conséquences sur la position des épaules.
   - « C » représente le niveau du plan incliné. Ce réglage influe sur la position de la tête et du cou.

Pour chaque élément, les positions suivantes sont possibles :
- position « 1 » (basse) : définit en général l'inaction musculaire et le déséquilibre gravitaire. Représentée en rouge.
- position « 2 » (moyenne) : présente une possibilité d'action musculaire, mais avec un risque de fatigue, car dans un équilibre précaire. Représentée en bleu.
- position « 3 » (haute) : position équilibrée, permettant une mobilité totale jusqu'aux extrémités. Représentée en vert.

Les couleurs correspondent ainsi à des critères de mobilité :
- Rouge : action musculaire difficile, risques de contractures, contraintes discales ou articulaires ;
- Bleu : action de redressement recommandée, muscle fatigable, risques de contraintes et contractures moyennes ;
- Vert : liberté de mouvements, diminution de la fatigabilité, augmente la capacité de travail ou de concentration.

Les conséquences correspondantes apparaissent, dans les parties fléchies sous la forme de tensions musculaires, et au sommet des courbures sous la forme de compressions discales (cf. FIGURE 3)
- Tensions musculaires décroissantes depuis la position 1 (représentées ici par « /// »), puis 2 (« // »), jusqu'à la position 3 (« / ») ;
- Compressions discales décroissantes depuis la position 1 (représentées ici par « =0= »), puis 2 (« 0 »), jusqu'à la position 3 (« . »).

Le psoas est un muscle fléchisseur situé au niveau de la hanche et qui soulève la cuisse en AVANT. Il présente un fonctionnement comportant à la fois des possibilités volontaires et un maintien involontaire, ce qui le rend particulièrement significatif dans l'acquisition des automatismes de postures. Quand les pieds sont fixes, il ramène inversement le bassin sur la cuisse et par conséquent participe au redressement du dos (notamment en position assise « en tailleur »).

La formule minimale peut être installée sur tous les ordinateurs, pour palier l'absence d'apprentissage préalable du redressement de la colonne vertébrale, notamment en l'absence de mobilier ergonomique réglable, et des possibilités de réglage du poste de travail à la taille de l'utilisateur.

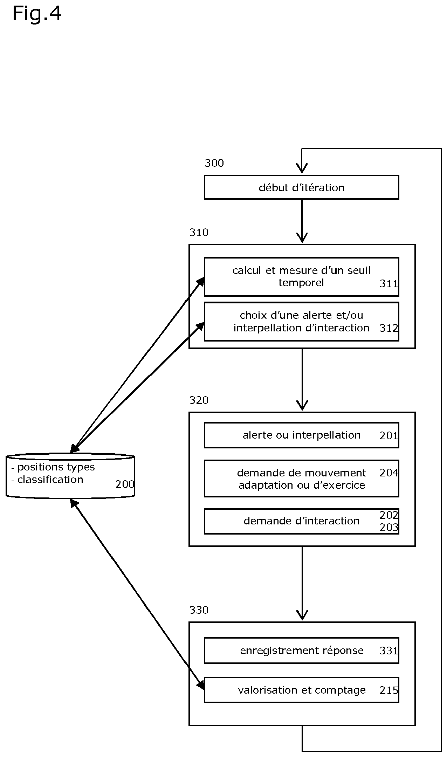

La FIGURE 4 illustre une partie du fonctionnement du procédé selon l'invention, dans une version correspondant à la formule dite « minimale », c'est à dire sans nécessiter de capteurs de position ni réglages de mobilier.

Ainsi, une itération correspondant à une alerte bleue 213 ou verte 214 comprend :
- une étape 310, 211 comprenant un calcul 311 et un choix 312 d'un type d'alerte et de son contenu ;
- une étape de génération 320 d'alerte ou d'interpellation, cette étape comprenant une simple interpellation d'information 201, ou une demande de mouvement 204 d'exercice ou d'adaptation, ou une demande d'interaction telle qu'un questionnaire 202 ou une demande 203 de mouvement virtuel à réaliser sur un avatar animé ;
- une étape 330 de retour d'information comprenant un enregistrement 331 de la réaction ou de la réponse de l'utilisateur par les moyens de l'interface de saisie et entrée 230, ainsi qu'une valorisation 215 optionnelle de cette réaction pour modification d'un compteur de score

Optionnellement, une fonction de surveillance peut aussi être implémentée dans une formule minimale, par exemple en demandant à l'utilisateur de saisir lui-même un ou plusieurs paramètres de réglage de son mobilier et/ou de sa posture. Des alertes peuvent alors être générées à partir d'une analyse des données saisies par rapport à la base de données, et en surveillant des intervalles de durée correspondant aux données saisies et analysées.

### Formule restreinte 1

En plus des fonctions de la formule « minimale », le système dans la formule « restreinte 1 » apporte deux fonctions : l'une dite « passive » et l'autre dite « active » (ou « interactive »).

La fonction passive (automatique) utilise les informations du coussin capteur 240 pour évaluer la position de l'utilisateur en relation avec la base de données 200 et déclencher des alertes rouges ou bleues en fonction de la gravité de la posture et de la durée écoulée.

La fonction active propose des interpellations d'apprentissage des mouvements, et utilise les informations du coussin pour contrôler et valider l'exercice. Le logiciel compare les données reçues des capteurs du coussin avec le tableau ergonomique de la base de données et renseigne l'utilisateur sur le maintien de sa posture, bonne ou mauvaise, et l'exécution des mouvements proposés, par exemple d'exercice ou d'adaptation de posture.

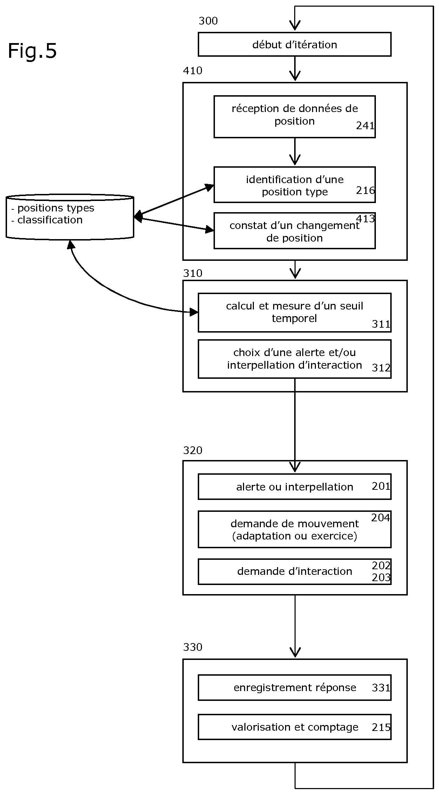

La FIGURE 5 illustre une partie du fonctionnement du procédé selon l'invention, dans une version correspondant à la formule dite « restreinte 1 », c'est à dire avec capteurs de position mais sans utiliser de réglages de mobilier.

Ainsi, une itération correspondant à une alerte rouge 212 ou bleue 213 ou verte 214 comprend, en plus des étapes de la FIGURE 4, une phase 410 comprenant une ou plusieurs des étapes suivantes :
- une étape 241 de réception de données représentant la position ou le changement de position de l'utilisateur ;
- une étape 216 d'évaluation de la position actuelle de l'utilisateur par rapport aux positions types mémorisées dans la base de données 200 ;
- une étape 413 de détection ou de détermination d'un changement de position type de l'utilisateur, par un changement de réglage du mobilier ou par une adaptation volontaire de posture par l'utilisateur.

### Formule restreinte 2

En plus des fonctions de la formule « restreinte 1 », le mobilier réglable de la formule « restreinte 2 » permet d'optimiser la position d'équilibre, et donc les mouvements d'apprentissage ou d'exercice.

Par exemple dans le cas d'une alerte « rouge », l'interpellation montre 205 le réglage à effectuer par l'utilisateur sur le mobilier. Le coussin capteur détecte la modification de position obtenue. Le mobilier lui-même peut aussi participer à cette détection s'il comprend des détecteurs capables de communiquer avec le logiciel.

### Formule complète

En plus des fonctions de la formule « restreinte 2 », la motorisation des réglages de la formule « complète » permet un réglage du mobilier directement sur commande du logiciel, automatiquement ou sur proposition calculée et affichée par le logiciel puis acceptée par l'utilisateur. Il est à noter que cette appellation de « complète » n'est que relative au mode de réalisation décrit ici, et n'exclut nullement qu'un autre mode de réalisation puisse comprendre d'autres caractéristiques supplémentaires.

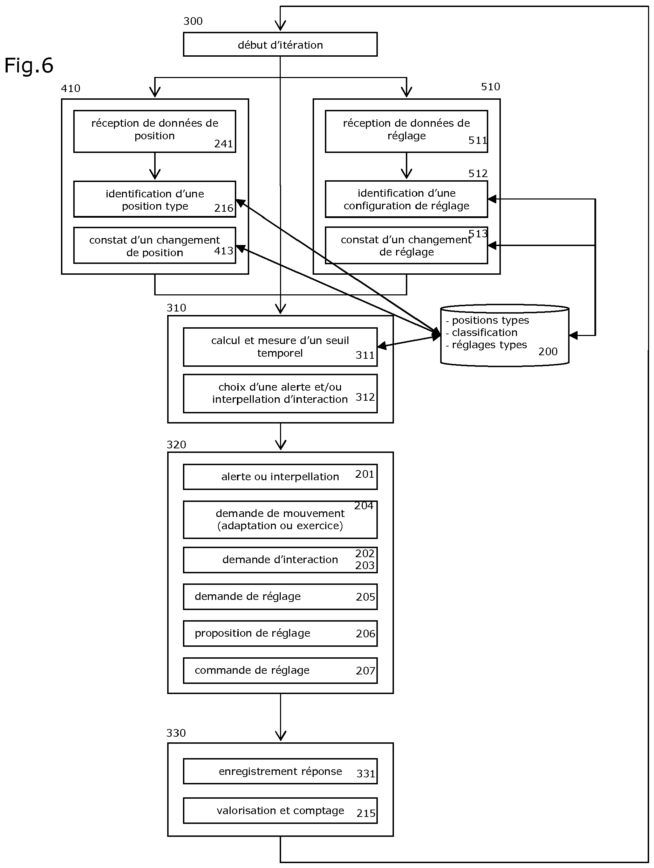

La FIGURE 6 illustre une partie du fonctionnement du procédé selon l'invention, dans une version correspondant à la formule dite « complète », c'est à dire avec capteurs de position et réglages motorisés du mobilier.

Ainsi, une itération 500 correspondant à une alerte rouge 212 ou bleue 213 ou verte 214 comprend, en plus des étapes de la FIGURE 5, une phase 510 comprenant une ou plusieurs des étapes suivantes :
- une étape 511 de réception de données représentant le réglage actuel ou le changement de réglage du mobilier ;
- une étape 512 d'identification du réglage actuel du mobilier par rapport à des données de réglage mémorisées dans la base de données 200 et associées aux positions types ;
- une étape 513 de détection ou de détermination d'un changement de réglage du mobilier correspondant à un changement de position type de l'utilisateur.

En outre, l'étape 320 de génération d'une interpellation ou d'une alerte peut comprendre une ou plusieurs des étapes suivantes :
- émission d'une alerte comprenant une demande 205 de réalisation d'un réglage du mobilier par l'utilisateur ;
- émission d'une alerte comprenant une proposition 206 de commande directe d'un réglage du mobilier par le logiciel ;
- émission 207 d'une commande d'un réglage du mobilier par le logiciel.

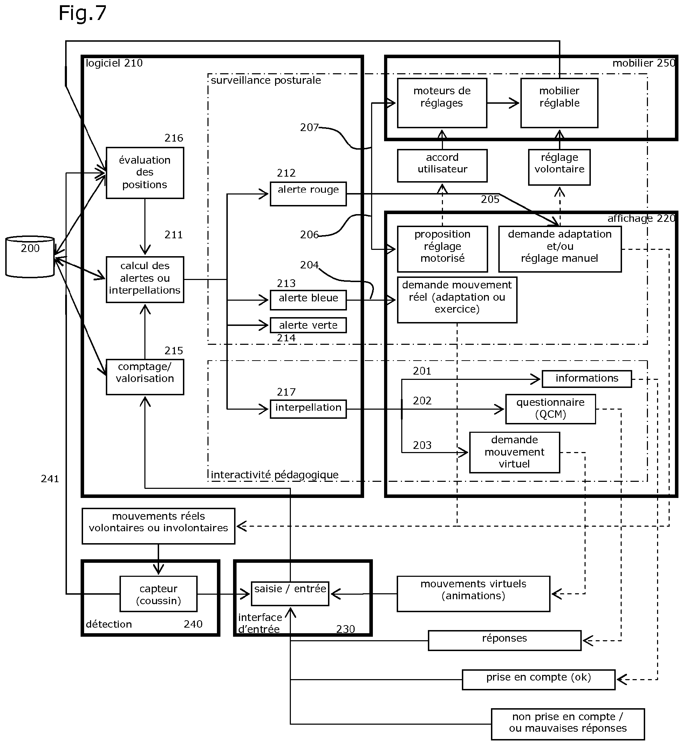

La FIGURE 7 illustre schématiquement l'architecture et les interactions et le fonctionnement d'un système mettant en oeuvre le procédé selon l'invention, dans le mode de réalisation illustré en FIGURE 1 et dans une version correspondant à la formule dite « complète ».

Un programme informatique 210 interagit avec l'utilisateur 100 par l'intermédiaire d'un affichage 220 et d'une interface d'entrée 230. Selon les options existant dans le système, il peut communiquer avec des moyens de détection 240 de la position d'assise de l'utilisateur, par exemple un coussin muni de capteurs de pression, et avec des moyens de réglage 250 du mobilier.

Le programme informatique 210 détermine et déclenche 211 des alertes 212-214 de différents niveaux qui s'affichent sur l'écran 220 de l'ordinateur 191 à des intervalles déterminés. Ces intervalles dépendent entre autres de la présence ou non, et de l'évaluation 215, des réactions précédentes de l'utilisateur. Ils dépendent aussi de l'évaluation 216 de la position actuelle de l'utilisateur, lorsque cette information est disponible 240.

Il détermine et déclenche 211 aussi des interpellations 217 de différents types, pouvant varier en fonction des mêmes paramètres, ces types étant de préférence déterminés de façon à couvrir au bout d'un certain temps de fonctionnement la totalité ou une partie principale des différents types d'interpellations disponibles.

Ces interpellations 217 peuvent comprendre en particulier, séparément ou en combinaison :
- une simple information 201 de l'utilisateur, par exemple :
   - un simple rappel graphique ou sonore correspondant à un temps écoulé,
   - un affichage d'informations, de nature générale sur le comportement postural recommandé ou sur la situation actuelle de l'utilisateur (position et durée), et/ou
   - un affichage d'une animation représentant un personnage en situation sur le mobilier concerné, et montrant des caractéristiques de positions ou de mouvements d'exercice ou de mouvements de changement de position,
- une demande d'interaction logicielle, pouvant comprendre :
   - une demande d'interaction logicielle simple de type accusé de réception, par exemple cliquer sur un logo de rappel,
   - une ou plusieurs questions d'évaluation de connaissances, par exemple de type Questionnaire à Choix Multiples 202, et/ou
   - une demande 203 d'action de l'utilisateur sur un personnage virtuel pour lui faire réaliser un ou plusieurs mouvements, recommandés par le logiciel ou à deviner par l'utilisateur, dans le respect de contraintes virtuelles issues de la base de données ou correspondant au mobilier réel de l'utilisateur,
- une demande 204 de mouvement réel, pouvant comprendre :
   - un mouvement d'exercice correspondant à un exercice de mobilisation d'une partie du corps,
   - un mouvement d'adaptation volontaire dans le but d'obtenir un changement de position correspondant à un passage d'une position type à une autre position type, telles qu'identifiées en relation avec la base de données,
- une modification d'un ou plusieurs réglages du mobilier, pouvant être à réaliser 205 par l'utilisateur, ou réalisée automatiquement 207 ou sur proposition 206 du logiciel acceptée par l'utilisateur.

A titre d'exemples de mouvement demandé 204 par le logiciel 210 à titre d'exercice, compatible avec le système en formule minimale :
- bascule du bassin (équivalent à A1->A3)
- même chose + redressement dorsal (équivalent à B1->B3)
- même chose + rapprochement omoplates et alignement tête et cou (équivalent à C1->C3)
- vérification par le test du coude replié

La réaction de l'utilisateur, ou son absence de réaction, est ensuite prise en compte (traits en pointillés sur la FIGURE 7) par le logiciel 210. Celui ci utilise ces informations pour évaluer 215 la situation psychologique de l'utilisateur, par exemple son intérêt pour le sujet, et déterminer 211 les prochaines alertes. Ces informations sont aussi utilisées pour calculer une variation d'un score attribué à l'utilisateur, pouvant être associé à terme à des éléments incitatifs tels que des gains ou des cadeaux.

Lorsque les options correspondantes sont disponibles, le logiciel utilise 215 aussi des informations représentant des détections de mouvements de l'utilisateur (volontaires ou non, demandés ou non, ou à la suite de modifications de réglages demandées ou non par le logiciel), pour évaluer la position actuelle de l'utilisateur et modifier en conséquence les prochaines alertes déclenchées 211.

Chaque interpellation 217 peut être assortie d'informations ou de contraintes tirées de la base de données 200. Par exemple, une interpellation peut comprendre une demande 204 d'un mouvement de bascule du bassin d'arrière en avant. Un tel mouvement est possible à partir de la position A1, et correspondrait à un changement de réglage vers A2 ou A3. Ainsi, une position comprenant A1, par exemple A1B2C3, est relié à la position A3B3C3, qui est recherchée, par un chemin passant par une position comprenant A2 (par exemple A2B2C3). Cependant, le logiciel consulte la base de données qui lui indique que ce mouvement de bascule du bassin n'est pas possible dans certaines positions.

Ainsi, l'interpellation explique que le mouvement de bascule du bassin est possible :
- dans les positions comprenant A1, sauf celles comprenant aussi B1 (et C1 ou C2 ou C3) du fait des causes hautes qui paralysent le redressement de bassin, et
- dans les positions comprenant A2 ou A3 qui facilitent la participation du muscle Psoas.

Une telle interpellation pourra aussi afficher les informations suivantes concernant ce mouvement :
- l'effet de la pesanteur neutralise ce mouvement en A1,
- le psoas reste fatigable en A2, et
- l'équilibre du bassin est facilité en A3.

Les interpellations peuvent comprendre 202 des questionnaires, par exemple du type :
- « La position A1 B3 C2 permet-elle le redressement ? » OUI NON PEUT ETRE
- « Quel effort faut-il faire pour se redresser lorsque l'on est en position A1 B3 C2 ? »
- rapprocher les épaules OU
- baisser les jambes sous le siège et amener le bassin en avant OU
- rentrer le menton

Bien sûr, l'invention n'est pas limitée aux exemples qui viennent d'être décrits et de nombreux aménagements peuvent être apportés à ces exemples sans sortir du cadre de l'invention, tel que définit par les revendications qui suivent.

## Revendications

1. Procédé informatique interactif d'apprentissage didactique pour modifier le comportement postural d'un utilisateur (100) d'un mobilier (111 121, 131) en position assise au cours d'une activité prolongée comprenant un effort statique ou dynamique d'au moins une partie du corps,
ce procédé mettant en oeuvre une base de données (200) relatives à des paramètres (A, B, C) de positions de plusieurs zones articulées (101, 102, 103) déterminées du corps et à une pluralité de positions dites types (A1BAC1 à A3B3C3) du corps pouvant être obtenues, au cours de ladite activité prolongée, en modifiant lesdits paramètres, ledit procédé comprenant une ou plusieurs itérations des étapes suivantes par un ordinateur :
- mesurer une durée écoulée à partir d'un instant déterminé de début de cycle (300), postérieur à l'installation dudit utilisateur sur ledit ou au sein dudit mobilier ;
- détecter (211, 311) le franchissement d'un seuil de durée prédéterminé en relation avec ladite base de données et en fonction des éventuelles itérations précédentes ;
- générer un signal et/ou une information d'alerte (213, 214, 217) demandant (203, 204) audit utilisateur d'exécuter au moins un mouvement déterminé d'au moins une desdites zones articulées, avec son corps réel
ledit mouvement conduisant, au cours de ladite activité prolongée, d'une première position type à une deuxième position type de ladite base de données ;
- détecter un mouvement ou un changement de position du corps de l'utilisateur par des moyens de détection, par connexion à un coussin (112) de détection de la position de l'utilisateur sur une partie de support (111) d'un mobilier, ledit coussin étant posé sur l'assise et étant doté de plusieurs capteurs de pression répartis sur sa surface, et comprenant des moyens pour communiquer avec un système mettant en oeuvre ledit procédé, de façon à détecter l'emplacement de l'appui du bassin de l'utilisateur sur l'assise, et possiblement l'orientation de cet appui ; et
- évaluer (215) la conformité de la réaction de l'utilisateur à ladite demande avec son corps réel, et enregistrer (331) des données représentant ladite conformité.

2. Procédé selon la revendication précédente, **caractérisé en ce que** le coussin est doté de plusieurs capteurs de pression répartis sur sa surface, de façon à détecter l'orientation de l'appui du bassin de l'utilisateur sur l'assise.

3. Procédé selon l'une quelconque des revendications précédentes, **caractérisé en ce qu'**il comprend une évaluation de la conformité, en relation avec la base de données, de la réaction de l'utilisateur avec la demande qui lui est faite, ladite évaluation entraînant une modification (215) d'au moins un compteur dit de score.

4. Procédé selon l'une quelconque des revendications précédentes, **caractérisé en ce qu'**il comprend au moins une interpellation comprenant une question (202) attendant une réponse issue d'informations de la base de données (200).

5. Procédé selon l'une quelconque des revendications précédentes, comprenant en particulier les étapes suivantes :
- à un instant déterminé (300), collecter (241, 216) des données de position correspondant à une position présente de l'utilisateur (100) par rapport audit mobilier, par communication électronique avec les moyens de détection de la position de l'utilisateur par rapport au mobilier ;
- mesurer une durée écoulée à partir dudit instant déterminé ;
- détecter (311) le franchissement d'un seuil de durée prédéterminé en fonction des données de position collectées et en relation avec la base de données (200) ;
- générer un signal et/ou une information d'alerte (212, 213, 214) pour ledit utilisateur.

6. Procédé selon la revendication 4, comprenant en outre une détection (216) d'un changement de position type évaluée en relation avec la base de données (200), comprenant :
- une étape (241) de réception, depuis les moyens de détection de la position de l'utilisateur par rapport au mobilier, de données représentant la position ou le changement de position de l'utilisateur ;
- une étape (216) d'évaluation de la position actuelle de l'utilisateur par rapport aux positions types mémorisées dans la base de données (200).

7. Procédé selon l'une quelconque des revendications 4 ou 5, comprenant en outre une mesure du temps écoulé depuis une détection (216) d'un changement de position type.

8. Procédé selon l'une quelconque des revendications 4 à 6, comprenant en outre une sélection d'un type de niveau d'alerte parmi une pluralité de types de niveaux correspondant à des urgences différentes, en relation avec la base de données (200) et en fonction de la durée écoulée dans la position actuelle et/ou en fonction d'au moins une conformité de réaction antérieure de l'utilisateur.

9. Procédé selon l'une quelconque des revendications précédentes, **caractérisé en ce qu'**au moins une alerte générée comprend une demande à l'utilisateur de réaliser un mouvement avec son corps réel.

10. Procédé selon l'une quelconque des revendications précédentes mis en oeuvre avec un mobilier comportant au moins un paramètre de réglage correspondant à au moins un des paramètres (A, B, C) de positions de zones articulées (101, 102, 103) déterminées du corps, **caractérisé en ce qu'**au moins une alerte comprend une demande de réglage dudit paramètre par l'utilisateur.

11. Procédé selon la revendication 9 appliqué à un mobilier comportant au moins une motorisation de la modification du au moins un réglage, **caractérisé en ce qu'**au moins une alerte comprend une modification directe dudit réglage par la motorisation dudit mobilier, automatiquement ou sur proposition acceptée par l'utilisateur.

12. Procédé selon l'une quelconque des revendications précédentes, dans lequel les paramètres (A, B, C) de positions de zones articulées (101, 102, 103) déterminées du corps correspondent au moins à une hauteur (A) d'assise (111) et à une hauteur (B) de surface de travail (121) et à une inclinaison (C) de plan de travail (131).

13. Système informatisé comprenant des moyens agencés pour communiquer avec des moyens de détection de la position de l'utilisateur (100) sur une partie de support (111) d'un mobilier,
ledit système informatisé comprenant des moyens de calcul informatiques programmés pour exécuter un programme informatique agencé pour mettre en oeuvre toutes les étapes du procédé selon l'une quelconque des revendications 1 à 12, en communiquant avec une base de données (200) relatives à des paramètres (A, B, C) de positions de plusieurs zones articulées (101, 102, 103) déterminées du corps et à une pluralité de positions dites types (A1BAC1 à A3B3C3) du corps pouvant être obtenues, au cours de ladite activité prolongée.

14. Dispositif de détection de la position d'un utilisateur (100) sur une partie de support (111) d'un mobilier, comprenant un coussin destiné à être posé sur l'assise et qui est doté de plusieurs capteurs de pression répartis sur sa surface ; et comprenant des moyens pour communiquer avec un système selon la revendication 13 de façon à détecter l'emplacement de l'appui du bassin de l'utilisateur sur l'assise, et possiblement l'orientation de cet appui.

15. Dispositif selon l'une quelconque des revendications 13 ou 14, **caractérisé en ce qu'**il comprend des capteurs agencés pour détecter un déplacement de la ligne gravitaire de l'utilisateur, définie par la ligne verticale passant par le tragus de l'oreille.

## Patentansprüche

1. Interaktives, didaktisches Computerlehrverfahren zur Änderung des Positionsverhaltens eines Benutzers (100) eines Möbelstücks (111, 121, 131) in sitzender Position bei einer längeren Tätigkeit mit statischer oder dynamischer Kraftausübung mindestens eines Körperteils,
wobei dieses Verfahren eine Datenbasis (200) von Positionsparametern (A, B, C) mehrerer bestimmten Gelenkzonen (101, 102, 103) des Körpers und von einer Vielzahl von sogenannten typischen Positionen (A1 BAC1 bis A3B3C3) des Körpers umsetzt, welche während der längeren Tätigkeit durch Änderung der Parameter erzielt werden können, wobei das Verfahren eine oder mehrere Iterationen der folgenden Schritte durch einen Computer umfasst:
- Messung einer Zeitdauer, welche ab einem bestimmten Zeitpunkt des Zyklusbeginns (300) nach der Niederlassung des Benutzers auf oder in dem Möbelstück läuft;
- Erkennung (211, 311) beim Überschreiten einer vorbestimmten Obergrenze einer Zeitdauer in Verbindung mit der Datenbasis und entsprechend der möglichen vorangegangenen Iterationen;
- Ausgabe eines Warnsignals und/oder eines Warnhinweises (213, 214, 217), wobei der Benutzer dazu aufgefordert (203, 204) wird, mindestens eine bestimmte Bewegung mindestens einer der Gelenkzonen mit seinem reellen Körper auszuführen,
wobei die Bewegung bei der längeren Tätigkeit von einer ersten typischen Position in eine zweite typische Position der Datenbasis führt;
- Erkennung einer Bewegung oder einer Positionsänderung des Körpers des Benutzers durch Erkennungsmittel über Anschluss an einem Kissen (112) zur Erkennung der Position des Benutzers auf einem Trägerteil (111) eines Möbelstücks, wobei das Kissen auf der Sitzfläche liegt und mit mehreren, auf seiner Oberfläche verteilten Drucksensoren versehen ist und Mittel zur Kommunikation mit einem das Verfahren umsetzenden System derart umfasst, um die Lage des auf der Sitzfläche aufliegenden Beckens des Benutzers und möglicherweise die Ausrichtung dieser Auflage zu erkennen, und
- Bewertung (215) der Übereinstimmung der mit seinem reellen Körper Reaktion des Benutzers auf die Aufforderung und Speicherung (331) der diese Übereinstimmung darstellenden Daten.

2. Verfahren nach dem vorhergehenden Anspruch, **dadurch gekennzeichnet, dass** das Kissen mit mehreren, auf seiner Oberfläche verteilten Drucksensoren versehen ist, sodass die Ausrichtung der Auflage des Benutzerbeckens auf der Sitzfläche erkannt wird.

3. Verfahren nach einem der vorhergehenden Ansprüche, **dadurch gekennzeichnet, dass** es in Verbindung mit der Datenbasis eine Bewertung der Übereinstimmung der Reaktion des Benutzers mit der ihm aufgegebenen Aufforderung umfasst, wobei die Bewertung zu einer Änderung (215) mindestens eines sogenannten Score-Zählers führt.

4. Verfahren nach einem der vorhergehenden Ansprüche, **dadurch gekennzeichnet, dass** es mindestens eine Interpellation umfasst mit einer Fragestellung (202), welche auf eine Antwort aus Informationen der Datenbasis (200) wartet.

5. Verfahren nach einem der vorhergehenden Ansprüche, außerdem folgende Schritte umfassend:
- Erhebung (241, 216), zu einem bestimmten Zeitpunkt (300), der Positionsdaten, die einer gegenwärtigen Position des Benutzers (100) im Vergleich zu dem Möbelstück über elektronische Kommunikation mit den Mitteln zur Erkennung der Position des Benutzers im Vergleich zum Möbelstück entsprechen.
- Messung einer ab dem bestimmten Zeitpunkt laufenden Zeitdauer;
- Erkennung (311) beim Überschreiten einer vorbestimmten Obergrenze einer Zeitdauer entsprechend der erhobenen, mit der Datenbasis (200) verbundenen Positionsdaten;
- Ausgabe eines Warnsignals und/oder eines Warnhinweises (212, 213, 214) für den Benutzer.

6. Verfahren nach Anspruch 4, außerdem eine Erkennung (216) einer typischen Positionsänderung umfassend, welche in Verbindung mit der Datenbasis (200) bewertet wird, umfassend:
- einen Schritt (241) zum Empfangen, von den Mitteln zur Erkennung der Position des Benutzers im Vergleich zu dem Möbelstück ausgehend, von Daten, die die Position oder die Änderung in der Position des Benutzers darstellen;
- einen Schritt (216) zur Bewertung der aktuellen Position des Benutzers im Vergleich zu den in der Datenbasis (200) gespeicherten typischen Positionen.

7. Verfahren nach einem der Ansprüche 4 oder 5, außerdem eine Messung der seit einer Erkennung (216) einer Änderung in der typischen Position laufenden Zeitdauer umfassend.

8. Verfahren nach einem der Ansprüche 4 bis 6, außerdem umfassend eine Auswahl von einer Art von Warnpegeln aus einer Vielzahl von Pegelarten, welche verschiedenen Dringlichkeiten entsprechen, in Verbindung mit der Datenbasis (200) und entsprechend der in der aktuellen Position verbrachten Zeitdauer und/oder entsprechend mindestens einer vorangehenden Übereinstimmung mit der Reaktion des Benutzers.

9. Verfahren nach einem der vorhergehenden Ansprüche, **dadurch gekennzeichnet, dass** mindestens einer der erzeugten Warnhinweise eine Aufforderung an den Benutzer umfasst, eine Bewegung mit seinem reellen Körper auszuführen.

10. Verfahren nach einem der vorhergehenden Ansprüche, das mit einem Möbelstück umgesetzt wird, welches mindestens ein Einstellungsparameter umfasst, das mindestens einem der Parameter (A, B, C) der Positionen von bestimmten Gelenkzonen (101, 102, 103) des Körpers entspricht, **dadurch gekennzeichnet, dass** mindestens ein Alarmhinweis eine Aufforderung zur Einstellung des Parameters durch den Benutzer umfasst.

11. Verfahren nach Anspruch 9 an einem Möbelstück angewendet, das mindestens eine Motorisierung der Änderung der wenigstens einen Einstellung umfasst, **dadurch gekennzeichnet, dass** mindestens ein Alarmhinweis eine direkte Änderung der Einstellung durch die Motorisierung des Möbelstücks entweder automatisch oder auf Aufforderung, die durch den Benutzer angenommen wird, umfasst.

12. Verfahren nach einem der vorhergehenden Ansprüche, in welchem die Positionsparameter (A, B, C) von bestimmten Gelenkzonen (101, 102, 103) des Körpers mindestens einer Höhe (A) der Sitzfläche (111) und einer Höhe (B) der Arbeitsfläche (121) und einer Neigung (C) der Arbeitsplatte (131) entsprechen.

13. Computerimplementiertes Verfahren mit Mitteln, die zur Kommunikation mit Mitteln zur Erkennung der Position des Benutzers (100) auf einem Trägerteil (111) eines Möbelstücks angeordnet sind,
wobei das computerimplementiertes Verfahren computergestützte Berechnungsmittel umfasst, welche zur Ausführung eines Computerprogramms programmiert sind, das zur Durchführung aller Schritte des Verfahrens nach einem der Ansprüche 1 bis 12 angeordnet ist, wobei es mit einer Datenbasis (200) über Positionsparameter (A, B, C) mehrerer bestimmten Gelenkzonen (101, 102, 103) des Körpers und über eine Vielzahl von sogenannten typischen, bei einer längeren Tätigkeit erzielbaren Körperpositionen (A1 BAC1 bis A3B3C3) kommuniziert.

14. Vorrichtung zur Erkennung der Position eines Benutzers (100) auf einem Trägerteil (111) eines Möbelstücks, ein Kissen umfassend, das dazu bestimmt ist, auf der Sitzfläche zu liegen, und mit mehreren, auf seiner Oberfläche verteilten Drucksensoren versehen ist, und Mittel zur Kommunikation mit einem System nach Anspruch 13 umfassend, sodass die Lage, wo das Becken des Benutzers auf der Sitzfläche aufliegt, und möglicherweise die Ausrichtung dieser Auflage erkannt werden.

15. Vorrichtung nach einem der Ansprüche 13 oder 14, **dadurch gekennzeichnet, dass** sie derart angeordnete Sensoren umfasst, um eine Verschiebung der Schwerkraftlinie des Benutzers zu erkennen, welche von der vertikalen, durch den Ohrtragus verlaufenden Linie bestimmt wird.

## Claims

1. Interactive electronic method of didactic training for changing the postural behaviour of a user (100) of a set of furniture (111,121,131) in a seated position during a sustained activity comprising static or dynamic exertion of at least one part of the body,
this method utilizing a database (200) relating to parameters (A, B, C) for the positions of several determined articulated areas (101, 102, 103) of the body and to a plurality of positions, called typical positions, (A1 BAC1 to A3B3C3) of the body that can be achieved during said sustained activity by modifying said parameters, said method comprising one or more iterations of the following steps by a computer:
- measuring an elapse time starting from a determined cycle start time (300), subsequent to said user sitting on or within said set of furniture;
- detecting (211, 311) when a time threshold is reached that is predetermined in relation to said database and as a function of any optional preceding iterations;
- generating a signal and/or an item of alert information (213, 214, 217) requesting (203, 204) said user to carry out at least one determined movement of at least one of said articulated areas with his real body
said movement leading, during said sustained activity, from a first typical position to a second typical position from said database;
- detecting a movement or a change in the position of the body of the user by detection means, by connection to a cushion (112) for detecting the position of the user on a support part (111) of a set of furniture, said cushion being placed on the seat and being equipped with several pressure sensors distributed over its surface, and comprising means for communicating with a system implementing said method, so as to detect the location of the pressure of the user's pelvis on the seat, and possibly the direction of this pressure; and
- assessing (215) the compliance of the user's reaction through his real body with said request, and recording (331) data showing said compliance.

2. Method according to the preceding claim, **characterized in that** the cushion is equipped with several pressure sensors distributed over its surface, so as to detect the direction of the pressure of the user's pelvis on the seat.

3. Method according to any one of the preceding claims, **characterized in that** it comprises an assessment of the compliance, in relation to the database, of the user's reaction with the request made to him, said assessment involving a change (215) of at least one counter called score counter.

4. Method according to any one of the preceding claims, **characterized in that** it comprises at least one inquiry comprising a question (202) awaiting a response resulting from items of information from the database (200).

5. Method according to any one of the preceding claims, comprising in particular the following steps:
- at a determined time (300), collecting (241, 216) position data corresponding to a present position of the user (100) relative to said set of furniture by electronic communication with the means for detecting the position of the user relative to the set of furniture;
- measuring an elapse time starting from said determined time;
- detecting (311) when a time threshold is reached as a function of items of position data collected and in relation to the database (200);
- generating a signal and/or an item of alert information (212, 213, 214) for said user.

6. Method according to claim 4, also comprising detecting (216) a change of typical position assessed in relation to the database (200), comprising:
- a step (241) of receiving, from the means for detecting the position of the user relative to the set of furniture, data representing the position or the change of position of the user;
- a step (216) of assessing the current position of the user relative to the typical positions stored in the database (200).

7. Method according to any one of claims 4 or 5, also comprising measuring an elapse time since detection (216) of a change of typical position.

8. Method according to any one of claims 4 to 6, also comprising selecting a type of alert level from among a plurality of types of levels corresponding to different urgencies, in communication with the database (200) and as a function of the elapse time in the current position and/or as a function of at least one previous compliant reaction of the user.

9. Method according to any one of the preceding claims, **characterized in that** at least one alert generated comprises a request to the user to carry out a movement with his real body.

10. Method according to any one of the preceding claims implemented with a set of furniture comprising at least one setting parameter corresponding to at least one of the parameters (A, B, C) for the positions of determined articulated areas (101, 102, 103) of the body, **characterized in that** at least one alert comprises a request for setting of said parameter by the user.

11. Method according to claim 9 applied to a set of furniture comprising at least one motorization of the change of at least one setting, **characterized in that** at least one alert comprises a direct change of said setting by the motorization of said set of furniture, either automatically or by a suggestion accepted by the user.

12. Method according to any one of the preceding claims, in which the parameters (A, B, C) for the positions of the determined articulated areas (101, 102, 103) of the body correspond at least to a height (A) of the seat (111) and a height (B) of the work surface (121) and an inclination (C) of the working area (131).

13. Computer system comprising means arranged in order to communicate with means for detecting the position of the user (100) on a support part (111) of a set of furniture,
said computer system comprising electronic calculation means programmed in order to execute a computer program arranged in order to implement all of the steps of the method according to any one of claims 1 to 12, by communicating with a database (200) relating to parameters (A, B, C) for positions of several determined articulated areas (101, 102, 103) of the body and to a plurality of positions called typical positions (A1 BAC1 to A3B3C3) of the body that can be obtained during said sustained activity.

14. Device for detecting the position of a user (100) on a support part (111) of a set of furniture, comprising a cushion intended to be placed on the seat and which is equipped with several pressure sensors distributed on its surface; and comprising means for communicating with a system according to claim 13 so as to detect the location of the pressure of the user's pelvis on the seat, and possibly the direction of this pressure.

15. Device according to any one of claims 13 or 14, **characterized in that** it comprises sensors arranged in order to detect a displacement of the line of gravity of the user, defined by the vertical line passing through the tragus of the ear.
